# EUROPÄISCHE PATENTSCHRIFT

(11) **EP 1 192 040 B1**
(45) Veröffentlichungstag und Bekanntmachung des Hinweises auf die Patenterteilung: **05.03.2003**
(21) Anmeldenummer: 00949418.8
(22) Anmeldetag: 28.07.2000
(51) Int. Cl.: B29C 67/00

(54) **VERFAHREN UND VORRICHTUNG ZUM HERSTELLEN EINES DREIDIMENSIONALEN OBJEKTS**
METHOD AND DEVICE FOR PRODUCING A THREE-DIMENSIONAL OBJECT
PROCEDE ET DISPOSITIF DE PRODUCTION D'UN OBJET TRIDIMENSIONNEL

(30) Priorität: 06.08.1999 DE 19937260
(43) Veröffentlichungstag der Anmeldung: 03.04.2002
(73) Patentinhaber: EOS GmbH ELECTRO OPTICAL SYSTEMS, 82152 Planegg (DE)
(72) Erfinder: OBERHOFER, Johann, D-82131 Stockdorf (DE); WEIDINGER, Jochen, D-81476 München (DE); MATTES, Thomas, D-82110 Germering (DE)
(74) Vertreter: Prüfer, Lutz H., Dipl.-Phys.
(86) Internationale Anmeldenummer: EP0007318
(87) Internationale Veröffentlichungsnummer: WO01010631

(56) Entgegenhaltungen:
- WO-A-92/08592
- WO-A-95/34468
- DE-A- 19 533 960
- DE-U- 29 506 716
- US-A- 5 304 329
- US-A- 5 482 659
- US-A- 5 569 431
- US-A- 5 590 454
- US-A- 5 622 577
- US-A- 5 658 412
- US-A- 5 662 158

## Beschreibung

Die Erfindung betrifft ein Verfahren zum Herstellen eines dreidimensionalen Objekts nach dem Oberbegriff des Patentanspruches 1 und eine Vorrichtung zum Herstellen eines dreidimensionalen Objekts nach dem Oberbegriff des Patentanspruches 28 bzw. eine Vorrichtung nach dem Oberbegriff des Patentanspruches 40.

Bei einem beispielsweise aus der US 4,863,538 bekannten Verfahren zum Herstellen eines dreidimensionalen Objekts mittels selektivem Lasersintern wird das Objekt durch sukzessives selektives Verfestigen von Schichten eines pulverförmigen Materials an dem Objekt entsprechenden Stellen in der jeweiligen Schicht unter Einwirkung eines Laserstrahles hergestellt. Die so hergestellten Objekte sind unmittelbar nach ihrer Fertigstellung noch heiß und weisen noch nicht ihre endgültige Festigkeit auf. Ferner muß das Objekt von unverfestigtem Pulver befreit werden, bevor es verwendet werden kann. Je nach Anwendung ist es außerdem wünschenswert oder erforderlich, die Objekte nachzubehandeln.

Aus der US 5,846,370 ist ein Verfahren und eine Vorrichtung bekannt, wonach vorgeschlagen wird, das Objekt in einem Behälter aufzubauen, der innerhalb einer Prozeßkammer vorgesehen ist und nach der Fertigstellung des Objektes aus dieser entfernt werden kann und als Kühlvorrichtung verwendet werden kann. Aus der EP 0 632 761 ist es bekannt, zusammen mit dem Objekt eine das Objekt umschließende Behälterwand mitzuverfestigen und diesen so gebildeten Behälter mitsamt dem Objekt nach dem Bauprozeß an einen separaten Ort zur Abkühlung zu stellen. Aus der EP 0 289 116 ist es bekannt, ein Objekt mittels Lasersintern eines Pulvers herzustellen, wobei die Pulverschichten mittels eines Wirbelbettverfahrens aufgebracht werden. Um das Objekt während des Bauprozesses auf einer gleichmäßigen Temperatur zu halten wird erwärmtes oder gekühltes Gas zugeführt. Aus der EP 0 287 657 ist es bekannt einen Strom temperaturgesteuerter Luft durch das Pulverbett hindurchzuführen, um Wärme aus dem Objekt während des Bauprozesses zu entfernen.

Aus dem deutschen Gebrauchsmuster DE 295 06 716.6 ist es ferner bekannt, ein mittels selektivem Lasersintern hergestelltes Objekt manuell aus dem das Objekt nach dem Aufbau noch umgebenden unverfestigten Pulver zu entfernen bzw. auszupakken. Aus der WO 00/21673 ist es bekannt, in einer Lasersintervorrichtung einen wechselbaren Baurahmen für das Objekt vorzusehen, der schnell und einfach aus der Lasersintervorrichtung entfernt und wieder eingebaut werden kann und so schnelle Jobwechsel ermöglicht. Aus der US 5,569,431 ist eine Vorrichtung und ein Verfahren bekannt, bei der bzw. bei dem ein mittels Stereolithographie gebildetes Objekt automatisch aus einem Bad aus flüssigem, photoverfestigbarem Material herausgehoben wird. Ferner offenbart die EP 0 403 146 eine Stereolithographieeinrich-tung, bei der eine Vorrichtung, in der das Objekt aufgebaut wird, und eine Nachbehandlungseinrichtung vorgesehen sind. Es ist ferner eine Transporteinrichtung zum Transportieren des Objekts zwischen den beiden vorgesehen.

Aus der US-A-5 662 158 ist ein Verfahren zur Herstellung von dreidimensionalen Implantaten bekannt. Dabei wird eine 3D-Printing-Technologie verwendet, bei der Pulvermaterial zu einem dreidimensionalen Objekt verfestigt wird. Überschüssiges Pulver wird durch Schütteln, Ultraschall oder Eintauchen in ein Bad oder eine Lösung entfernt.

Die DE 19 533 960 offenbart ein Verfahren für eine Vorrichtung, bei der metallische Werkstücke hergestellt werden, indem mit einem Laserstrahl Pulver, welches über eine Düse koaxial zu dem Laserstrahl in dem Schmelzbereich zugeführt wird, geschmolzen wird. Mittels einer Absaugvorrichtung wird überschüssiges Pulver abgesaugt.

Die Wo 92/08592 offenbart eine Vorrichtung zur Herstellung von Objekten durch Lasersintern. Überschüssiges Pulver wird über Entlüftungsöffnungen in einer Bodenplatte durch eine Gasströmung beseitigt und einem Filter zugeführt.

In den Druckschriften US-A-5 622 577 und WO 95/34468 werden Vorrichtungen und Verfahren zur Herstellung von dreidimensionalen Objekten offenbart, bei denen pulverförmiges Material auf eine Grundplatte aufgebracht wird und über ein Sinterverfahren zu einem Objekt verfestigt wird. Überflüssiges Pulvermaterial wird über einen Sieb nach unten abgeführt.

Es ist Aufgabe der Erfindung, ein Verfahren und eine Vorrichtung zum Herstellen eines dreidimensionalen Objekts aus verfestigbaren Pulvermaterial bereitzustellen, mit dem bzw. mit der der gesamte Herstellungsprozeß vereinfacht, automatisiert und/oder verkürzt werden kann und die Genauigkeit bei der Herstellung des Objekts verbessert wird.

Die Aufgabe wird gelöst durch ein Verfahren gemäß Patentanspruch 1 und eine Vorrichtung gemäß Patentanspruch 28 bzw. 40. Weiterbildungen der Erfindung sind in den Unteransprüchen angegeben.

Weitere Merkmale und Zweckmäßigkeiten der Erfindung ergeben sich aus der Beschreibung von Ausführungsbeispielen anhand der Figuren.

Von den Figuren zeigen
- Fig. 1: eine schematische Schnittansicht der erfindungsgemäßen Vorrichtung;
- Fig. 2: eine schematische Schnittansicht eines Details der Vorrichtung gemäß einer ersten Ausführungsform der Erfindung;
- Fig. 3: eine schematische Schnittansicht eines Details der Vorrichtung gemäß einer zweiten Ausführungsform der Erfindung;
- Fig. 4: eine schematische Schnittansicht eines Details der Vorrichtung gemäß einer weiteren Ausführungsform der Erfindung; und
- Fig. 5: eine schematische Schnittansicht eines Details der Vorrichtung gemäß noch einer weiteren Ausführungsform der Erfindung.

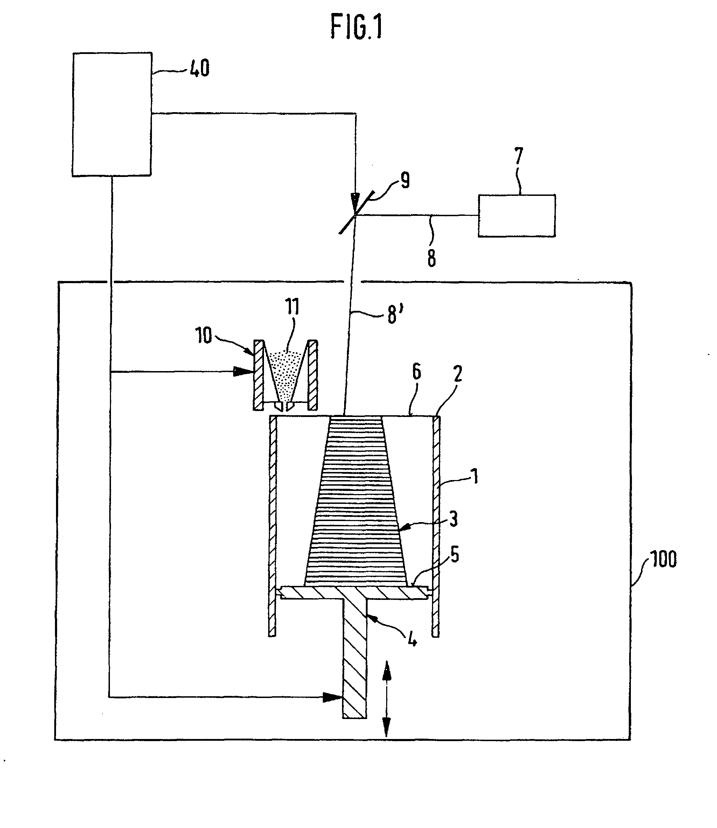

Wie insbesondere aus Fig. 1 ersichtlich ist, weist die Vorrichtung zum Herstellen eines dreidimensionalen Objektes einen nach oben offenen Behälter bzw. Baubehälter 1 mit einem oberen Rand 2 auf. Der Querschnitt des Behälters 1 ist größer als die größte Querschnittsfläche eines herzustellenden Objekts 3. In dem Behälter 1 ist ein Träger 4 zum Tragen des zu bildenden Objekts mit einer im wesentlichen ebenen, dem oberen Rand 2 zugewandten Oberfläche 5 vorgesehen. Der Träger 4 ist mittels eines in Fig. 1 schematisch angedeuteten Antriebes in dem Behälter 1 in vertikaler Richtung auf- und abbewegbar. Der obere Rand 2 des Behälters 1 definiert eine Arbeitsebene 6.

Der Behälter 1 ist in einer Prozeßkammer 100 lösbar befestigt, so daß er mitsamt dem darin gebildeten Objekt 3 aus der Prozeßkammer 100 entnehmbar ist.

Oberhalb der Arbeitsebene 6 ist eine Bestrahlungseinrichtung in Form eines Lasers 7 angeordnet, die einen gerichteten Lichtstrahl 8 abgibt. Es ist eine Ablenkeinrichtung 9, beispielsweise als ein System von Galvanometerspiegeln, vorgesehen, über die der Lichtstrahl 8 als abgelenkter Strahl 8' an jede gewünschte Stelle der Arbeitsebene 6 ablenkbar ist.

Es ist ein Beschichter 10 zum Aufbringen einer Schicht eines zu verfestigenden Pulvermaterials 11 auf die Trägeroberfläche 5 oder eine zuletzt verfestigte Schicht vorgesehen. Der Beschichter 10 ist mittels eines schematisch angedeuteten Antriebs von einer ersten Endstellung auf einer Seite des Behälters 1 in eine zweite Endstellung auf der gegenüberliegenden Seite des Behälters 1 über der Arbeitsebene 6 hin- und herbewegbar.

Es ist ferner eine Steuereinrichtung 40 vorgesehen, durch die der Antrieb zur Einstellung der Position des Trägers 4, der Antrieb zum Verfahren des Beschichters 10 und der Antrieb zum Verstellen der Ablenkeinrichtung koordiniert oder unabhängig voneinander steuerbar sind.

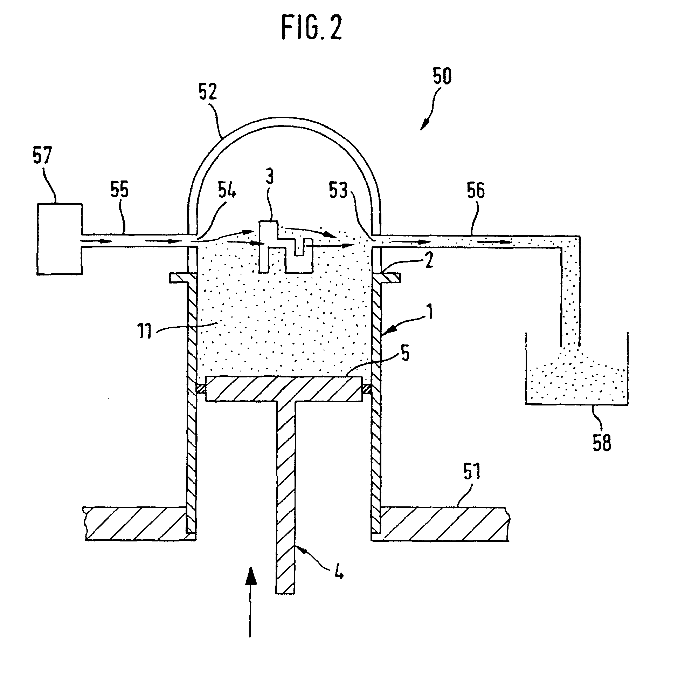

In einer in Fig. 2 dargestellten ersten Ausführungsform der Erfindung weist die Vorrichtung zum Herstellen des Objekts eine bevorzugt außerhalb der Prozeßkammer 100 angeordnete Vorrichtung 50 zum gesteuerten Entfernen des fertigen Objekts aus dem Behälter 1 auf. Die Vorrichtung 50 weist eine nur schematisch dargestellte Halterung 51 auf, in der der Behälter 1, nachdem er aus der Prozeßkammer entnommen ist einsetzbar ist und gehalten ist. Die Vorrichtung 50 weist ferner einen in Fig. 2 schematisch angedeuteten Antrieb zum Aufwärtsund Abwärtsbewegen des Trägers in der Vorrichtung 50 auf. Der Antrieb ist derart ausgebildet, daß der Träger mit einer einstellbaren Geschwindigkeit kontinuierlich oder schrittweise gegen den oberen Rand 2 des Behälters bewegt werden kann. Ferner ist der Antrieb so ausgebildet, daß der Träger 4, nachdem er in seiner obersten Stellung angelangt ist, wieder abgesenkt werden kann.

Es ist ferner eine den Behälter 1 an seiner offenen Seite gegen die Umgebung abschließende Abdeckung 52 in Form einer kuppelartigen Haube vorgesehen, die mit ihrem unteren Rand auf dem oberen Rand 2 des Behälters 1 ruht. Die Abdeckung 52 ist auf den Behälter aufsetzbar und zwischen dem oberen Rand 2 des Behälters 1 und der Abdeckung ist eine Dichtung vorgesehen, durch die eine hermetische Abdichtung gegen die Atmosphäre gewährleistet ist. Die Abdeckung weist zwei einander gegenüberliegende Öffnungen 53 und 54 auf, die in einem vorbestimmten Abstand vom unteren Rand der Abdeckung 52 vorgesehen sind. Die Öffnungen 53, 54 sind jeweils mit einer Zuführleitung 55 bzw. einer Abführleitung 56 zum Zuführen von einem unter Druck stehenden Gas bzw. zum Ableiten des Gases und mit dem Gasstrom aufgewirbelten Pulverteilchen verbunden. Die Zuführleitung 55 ist mit einer Vorrichtung 57 zum Zuführen eines-gasförmigen Mediums bevorzugt mit einer Druckluftquelle 57 verbunden. Die Abführleitung 56 ist mit einem Auffangbehälter 58 für abgeführtes Pulvermaterial verbunden. Die Öffnungen 53 und 54 in der Abdeckung 52 sind derart angeordnet, daß, wenn die Druckluftquelle 57 angeschlossen ist, ein im wesentlichen tangential über den oberen Rand 2 des Behälters fließender Gasstrom erzeugt ist. Die Druckluftquelle 57 ist so einstellbar, daß die Stärke des Luftstromes steuerbar ist. Ferner ist die Temperatur des gasförmigen Mediums steuerbar, so daß eine zur Kühlung erforderliche Temperatur einstellbar ist.

Bei dem erfindungsgemäßen Verfahren wird das Objekt zunächst in bekannter Weise auf dem Träger 4 innerhalb des Behälters 1 in der Prozeßkammer 100 hergestellt. Dazu wird erst der Träger 4 in die höchste Stellung gefahren, in der die Trägeroberfläche 5 in einem Abstand einer Schichtdicke der ersten aufzubringenden Schicht unterhalb des oberen Randes 2 des Behälters 1 liegt. Dann wird der Beschichter 10 über die Arbeitsebene 6 verfahren und eine erste Schicht von zu verfestigenden Pulver 11 aufgebracht. Anschließend wird die Ablenkeinrichtung 9 derart gesteuert, daß mit dem Laserstrahl 8 ein dem Querschnitt des Objekts in dieser Schicht entsprechender Bereich des Pulvermaterials verfestigt wird. Anschließend wird der Träger 4 abgesenkt und eine neue Schicht aufgebracht und ebenfalls wieder verfestigt. Diese Schritte werden so oft wiederholt, bis das Objekt 3 fertiggestellt ist. Als Pulvermaterial 11 wird Kunststoffpulver, wie beispielsweise Polyamidpulver, Metallpulver, Keramikpulver, kunststoffummantelter Sand oder Kombinationen davon, je nach Anwendungsgebiet verwendet.

Dann wird der Behälter mitsamt dem darin gebildeten Objekt 3 aus der Prozeßkammer 100 entfernt und in die Einrichtung 50 zum Auspacken des Objekts 3 gebracht. Der Träger 4 befindet sich dabei innerhalb des Behälters 1 in seiner untersten Stellung. Zwischen dem gebildeten Objekt 3 und der Behälterwand befindet sich noch nicht verfestigtes Pulvermaterial 11. Bei Verwendung von Kunststoffpulver ist das Objekt 3 typischerweise unmittelbar nach dem Fertigstellen noch heiß und hat noch nicht seine endgültige Festigkeit erreicht. Zum schonenden Auspacken und Abkühlen des Objekts wird nun die Abdeckung 52 auf den Behälter 1 aufgesetzt und die Druckluftquelle 57 angeschlossen. Anschließend wird der Träger 4 entweder kontinuierlich mit einer einstellbaren Geschwindigkeit oder schrittweise innerhalb des Behälters nach oben bewegt, so daß sich immer eine Menge an nichtverfestigtem Pulver oberhalb des Behälterrandes 2 befindet und von der Abdeckung 52 gehalten wird. Die Druckluftquelle 57 ist so eingestellt, daß ein ausreichend starker Luftstrom im wesentlichen tangential über die Pulveroberfläche streicht und dabei nicht verfestigtes Pulver mitreißt, welches durch die Auslaßöffnung 53 und die Abführleitung 56 entfernt wird und in dem Auffangbehälter 58 aufgefangen wird. Sobald durch Anheben des Trägers 4 das Objekt 3 innerhalb des Bereiches des die Oberfläche überstreichenden Luftstromes gelangt, wird dieses, durch den Luftstrom gekühlt. Wenn der Träger 4 in seiner obersten Endstellung ist, wird die Abdeckung 52 entfernt und das Objekt wird entnommen. Dabei ist es ausreichend abgekühlt. So wird das Objekt 3 in vorbestimmter Weise durch Einstellen der Temperatur und des Druckes des Luftstromes, sowie der Verfahrgeschwindigkeit des Trägers innerhalb des Behälters in vorbestimmter Weise aus dem Behälter 1 entfernt und der Behälter 1 ist wieder frei für einen neuen Einsatz in der Prozeßkammer 100. Das Verfahren hat den Vorteil, daß durch das gesteuerte Auspacken und Abkühlen des Objekts 3 schockartige Abkühlungen vermieden werden und gleichzeitig das nichtverfestigte Pulvermaterial ebenfalls langsam und gesteuert entfernt und abgekühlt wird, so daß es eine hohe Qualität für eine Wiederverwendung hat. Das Objekt 3 hingegen wird erst nach dieser Prozedur entnommen, so daß es im heißen und noch weichen Zustand nicht berührt werden muß und dadurch nicht verformenden Kräften ausgesetzt ist. Ferner hat das Abkühlen und Auspacken außerhalb der Prozeßkammer den Vorteil, daß diese für das Bilden neuer Objekte frei wird.

In einer alternativen Ausführungsform ist an die Abfuhrleitung 56 eine Saugpumpe angeschlossen, die den Abtransport des nicht verfestigten Pulver unterstützt. Die Luft kann auch zirkuliert werden, hierzu ist dann eine Verbindungsleitung zwischen der Luftabfuhrleitung 56 und der Luftzufuhrleitung 55 vorgesehen, in der ein Filter zum Trennen von aufgewirbeltem Pulver und der Luft angeordnet ist. Anstelle von Luft kann auch ein anderes Gas, beispielsweise ein Schutzgas wie Stickstoff zum Verhindern, daß das Pulver z. B. oxidiert, verwendet werden. Die gesamte Vorrichtung 50 kann auch innerhalb der Prozeßkammer 100 angeordnet sein, wobei dann allerdings die Prozeßkammer während des Auspackens und Abkühlens belegt ist.

In einer Abwandlung der Ausführungsform nach Fig. 2 sind anstelle der Öffnungen 53, 54 mehr als zwei Öffnungen in verschiedenen Positionen vorgesehen. Der Gasstrom kann auch anders als tangential zur Oberfläche gerichtet sein. Ferner ist eine Einrichtung zum Steuern der Richtung des Gasstromes, beispielsweise in Form einer steuerbaren Düse vorgesehen.

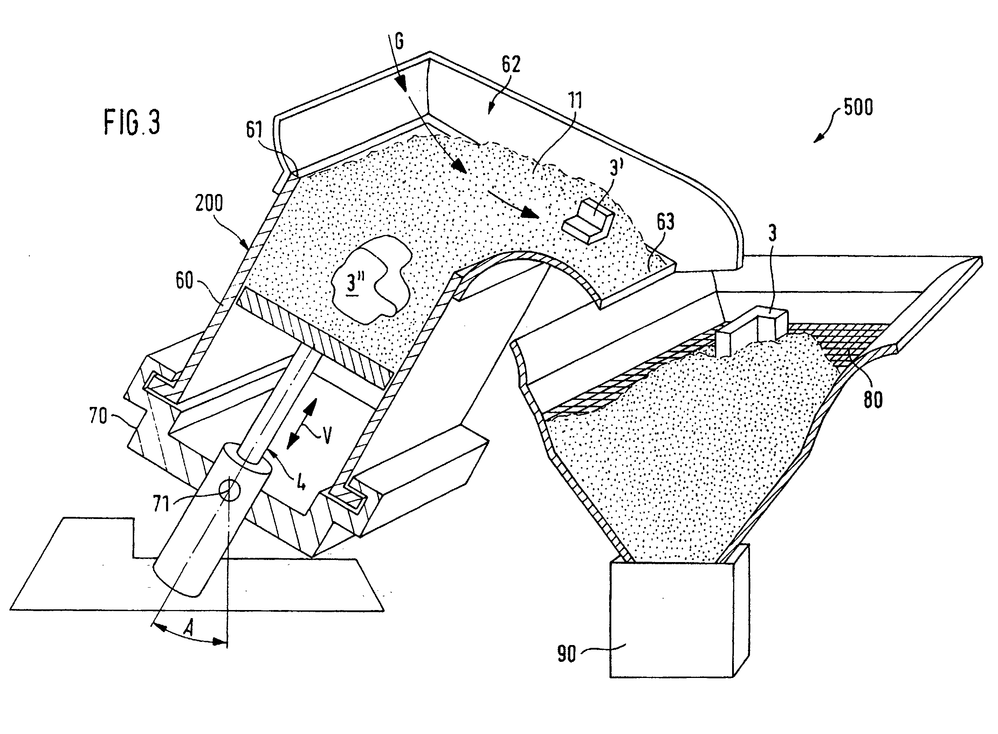

In einer weiteren, in Fig. 3 dargestellten Ausführungsform einer Einrichtung zum Entfernen des Objekts aus dem Baubehälter ist der Behälter 200 derartig ausgebildet, daß er einen Rahmen 60 mit vorzugsweise quadratischem oder rechteckigem Querschnitt aufweist, innerhalb dem der Träger 4 auf- und abbewegbar ist. Es ist ein ring- bzw. kragenförmiger Aufsatz bzw. Rand 62 vorgesehen, der auf den oberen Rand 61 des Behälterrahmens 60 aufsetzbar und wieder abnehmbar ist. Der Aufsatz 62 ist derart ausgebildet, daß er an wenigstens einer der vier Seiten des Behälterrahmens 60 eine Überlaufeinrichtung vorzugsweise in einer nach außen gewölbten, im Bereich des Überlaufs abgerundete Überlaufkante 63 bzw. einen Überlaufrand bildet und an den anderen drei Seiten über den Rand 61 des Behälterrahmens 60 hinausragt, so daß er eine Einrichtung zum Verhindern des Herausfallens von Pulver oder Objekt beim Verfahren des Trägers 4 nach oben bildet. Der Behälter 200 ist mit seinem Rahmen 60 in einer Halterung 70 gehalten, die bevorzugt außerhalb der Prozeßkammer 100 angeordnet ist. Es ist ferner eine Kippvorrichtung 71 vorgesehen, mit der der Behälter 200 mitsamt seiner Halterung 70 um einen vorbestimmten und einstellbaren Winkel A in vertikaler Richtung kippbar ist, so daß die Verschiebeachse V des Trägers 4 in dem Behälter 1 um diesen vorbestimmten Winkel A gegenüber der Vertikalen gekippt ist.

Unterhalb der Überlaufkante 63 des Behälters 1 ist eine Siebeinrichtung 80 vorzugsweise in Form eines Rüttelsiebes angeordnet und unterhalb des Rüttelsiebes ist ein Auffangbehälter 90 angeordnet.

In einer Abwandlung der Ausführungsform nach Fig. 3 sind der Behälter 1, die Siebeinrichtung 80 und ggf. der Auffangbehälter 90 in einer staub- und ggf. gasdichten Kammer zwecks Staubvermeidung und zum Ermöglichen der Steuerung der Temperatur der Umgebung angeordnet.

Bei dem Verfahren nach dieser Ausführungsform wird zunächst das Objekt 3 wie oben beschrieben innerhalb der Prozeßkammer fertiggestellt. Dabei ist es durchaus möglich, daß mehrere getrennte Objekte 3, 3', 3'' innerhalb des Behälters hergestellt werden, die voneinander durch unverfestigtes Pulvermaterial 11 getrennt sind.

Anschließend wird der Behälter 200 aus der Prozeßkammer entnommen und in die Halterung 70 der Einrichtung 500 zum Auspacken eingesetzt. Mittels der Kippvorrichtung 71 wird der Behälter 200 derart gekippt, daß die Achse V des Trägers 4 einen vorbestimmten Winkel A zur Vertikalen in Richtung auf die Sieb- bzw. Auffangeinrichtung 80 aufweist. Anschließend wird der Träger 4 kontinuierlich oder schrittweise angehoben, so daß unverfestigtes Pulvermaterial 11 über die Überlaufkante 63 geschoben wird und anschließend auf das Rüttelsieb 80 fällt. Die Maschenweite des Siebes 80 ist derart gewählt, daß nicht verfestigtes Pulver abgesiebt werden kann und in dem Auffangbehälter 90 zur Wiederverwendung aufgefangen und abtransportiert wird. Durch den Druck des nachkommenden von dem sich nach oben bewegenden Träger 4 über die Überlaufkante 63 geschobenen Pulvermaterials werden auch das oder die gebildeten Objekte über die Überlaufkante 3 geschoben und in dem Rüttelsieb 80 aufgefangen, von wo sie dann nach Absieben des unverfestigten Pulvermaterials entnommen werden können. Während des Anhebens des Trägers 4 kann der Kippwinkel A verändert z. B. vergrößert werden, so daß das Pulver und die Objekte aus dem Behälter vollständig über die Überlaufkante 63 geschoben werden können. Der Behälter 200 muß nicht notwendigerweise gekippt werden. Entscheidend ist das gesteuerte Auspacken, d.h. das gesteuerte Entfernen nicht verfestigten Pulvermaterials.

Es ist auch möglich bei diese Ausführungsform eine Kühleinrichtung, beispielsweise in Form eines entlang der Pulveroberfläche streichenden Luft- bzw. Gasstromes G vorzusehen, wodurch an der Pulveroberfläche auftauchende Objekte und das Pulver selbst gekühlt werden.

Auch eine Kombination der in Fig. 2 und Fig. 3 dargestellten Ausführungsformen für die Einrichtung zum Auspacken sind möglich. Das Überlaufen des Pulvers über die Kante 63 kann beispielsweise durch Druckluft oder durch einen an der Überlaufkante, dem Behälter oder dem Träger vorgesehenen Rüttler unterstützt werden.

In einer weiteren Ausführungsform ist eine Einrichtung vorgesehen, mit der das nichtverfestigte Pulver mechanisch in gesteuerter Weise entfernt wird. Eine solche Einrichtung kann beispielsweise durch eine oder mehrere Bürsten gebildet sein, durch die unverfestigtes Pulver bei der Aufwärtsbewegung des Trägers in dem Behälter von der Oberfläche wegbefördert wird und gegebenenfalls am Objekt haftende Pulverreste entfernt werden. Die mechanische Einrichtung zum Entfernen des Pulvers kann auch zum Unterstützen der Pulverentfernung beim Sieben verwendet werden.

Die Erfindung ist im übrigen nicht auf die Verwendung eines Gasstromes zur Entfernung von unverfestigtem Pulvermaterials beschränkt. Es ist auch möglich, anstelle des Gasstromes ein anderes fluides Medium zu verwenden, beispielsweise ein Gas/Pulvergemisch, eine Flüssigkeit oder ein Flüssigkeit/Pulvergemisch. Durch den Einsatz eines geeigneten fluiden Mediums ist es möglich, gleichzeitig mit dem Entfernen des Pulvers die Oberfläche des Bauteils zu behandeln., beispielsweise eine Glättung mittels eines Gas-/Pulverstromes oder eine Härtung mittels reaktiver Gase herbeizuführen. Eine derartige Nachbehandlung des Bauteiles kann gleichzeitig und automatisiert mit dem Entfernen des Pulvers in der Einrichtung zum Entfernen des Objekts aus dem Behälter oder nach dem Pulverentfernen stattfinden.

Sowohl die Ausführungsform nach Fig. 2, als auch die nach Fig. 3 bzw. Kombinationen derselben können ferner zusätzlich eine Temperatursteuervorrichtung zum Steuern der Temperatur des fluiden Mediums bzw. des Gasstroms und/oder der umgebenden Atmosphäre aufweisen. Bei einem Schritt der Steuerung der Temperatur zum gesteuerten Abkühlen des gebildeten Objekts entspricht die Umgebungstemperatur zunächst der Objekttemperatur und wird dann während des Siebens langsam verringert.

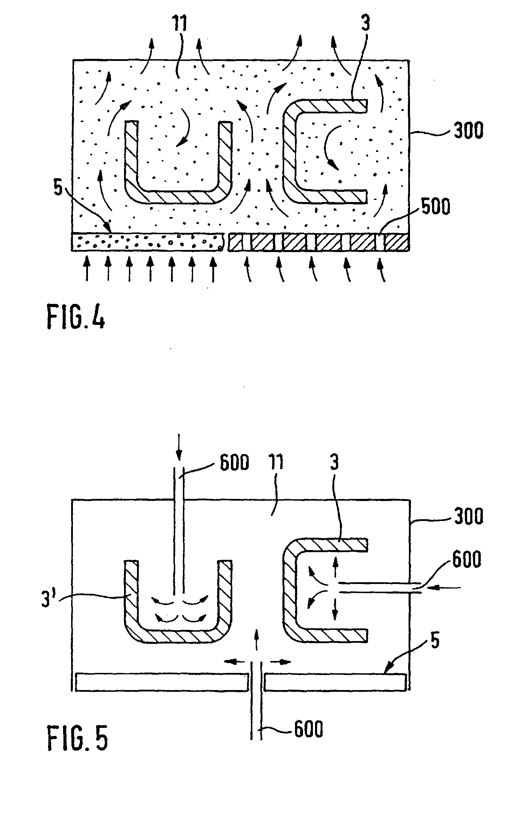

In einer weiter Ausführungsform, die in Fig. 4 dargestellt ist, ist die Trägeroberfläche 5, auch als Bauplattform bezeichnet, auf der das Objekt in einem Behälter 300 aufgebaut wird, porös ausgebildet, wie in der linken Hälfte von Fig. 4 dargestellt ist, oder mit Öffnungen 500 ausgestattet, wie in der rechten Hälfte von Fig. 4 dargestellt ist. Durch die poröse Bauplattform bzw. die Öffnungen wird von unten ein Gas, beispielsweise Luft, eingeblasen, welches eine Art Wirbelbett erzeugt und das das Objekt umgebende Pulver 11 auflockert. Eventuell bestehende Verdichtungen oder Klumpen werden somit gelockert, was das Auspacken erleichtert. Die Richtung, Strömung, Geschwindigkeit und Temperatur des Gases sind einzeln oder kombiniert steuerbar. Somit kann die Temperatur des gesamten Pulverbetts einschließlich des Objekts gesteuert werden. Diese Ausführungsform ist mit den bisher beschriebenen Ausführungsbeispielen zum Auspacken des Objekts kombinierbar. Alternativ oder zusätzlich zum Einblasen durch die Trägeroberfläche 5 kann das Gas auch durch die Seitenwände des Behälters 300 oder von oben in das Pulverbett eingeblasen werden.

In Fig. 5 ist als eine weitere Ausführungsform der Erfindung eine Vorrichtung zum gesteuerten Abkühlen des Objekts gezeigt. Durch die Bauplattform 5 und/oder die Seitenwände und/oder die obere Pulveroberfläche des Behälters 300 sind eine oder mehrere Zuführungseinrichtungen 600 für Gas in Form von Sonden oder ähnlichem hindurchgeführt, wobei die aus CAD-Daten bekannte Position und Geometrie des jeweiligen Objekts 3 berücksichtigt wird. Durch die Zuführungseinrich-tungen 600 wird Gas mit gesteuerter Temperatur zugeführt, so daß das Objekt durch lokale gezielte Konvektion unter definierten Temperaturbedingungen abgekühlt werden kann. Das Gas lockert auch das Pulverbett, wodurch das Auspacken erleichtert wird.

Je nach verwendetem Pulvermaterial kann der Bauprozeß so geführt werden, daß das Objekt unmittelbar nach dem Fertigstellen nicht heiß ist und daher keine Abkühlung benötigt. Auch hier haben die beschriebenen Verfahren und Vorrichtungen den Vorteil, daß das Objekt schonend und ohne manuelle Arbeit ausgepackt wird. Wenn das Objekt unmittelbar nach dem Fertigstellen bereits eine ausreichende Festigkeit hat, kann anstatt des kontinuierlichen oder schrittweisen Anhebens des Trägers der gesamte Inhalt des Behälters gleich auf die Sieb-bzw. Auffangeinrichtung entleert werden, beispielsweise durch Öffnen des Behälters. Diese Alternative hat den Vorteil, daß der Gesamtprozeß beschleunigt wird, wobei die oben beschriebenen Verfahren und Mittel zum Pulverentfernen und Abkühlen ebenso verwendet werden können.

Entscheidend ist es, daß Mittel zum gesteuerten Entfernen des nicht verfestigten Pulvermaterials vorgesehen sind, die das automatische Auspacken des gebildeten Objekts aus dem Behälter gesteuerter Weise ohne manuelle Arbeit ermöglichen.
Eine weitere Ausführungsform der Erfindung besteht darin, daß mit dem gesteuerten Auspacken und/oder Abkühlen mittels eines Gases oder eines fluiden Mediums die Objekteigenschaften gezielt beeinflußt werden, was eine manuelle Nachbehandlung erübrigt. Beispielsweise kann mit dem Einblasen von Gas eine chemische Nachbehandlung der Oberfläche des gebildeten Objekts erfolgen. Damit lassen sich die üblichen Herstellungsschritte zwischen Herstellung und Verwendung des Objekts beschleunigen. Nach einer weiteren Ausführungsform der Erfindung wird das Objekt, nachdem das unverfestigte Pulver entfernt worden ist, automatisch nachbehandelt, z.B. einer Infiltration mit Wachs oder Epoxidharz, unterzogen. Dabei wird die Temperatur des Bauraumes über die Temperatursteuerung auf einen geeigneten für die Infiltration erforderlichen Wert eingestellt

Die Erfindung ist ferner nicht darauf beschränkt, daß ein Laserstrahl zur Verfestigung des Pulvermaterials verwendet wird. Anstatt mit einem Laserstrahl kann das Pulver auch auf andere Weise verfestigt werden, beispielsweise mit anderen Energiestrahlen, wie z.B. mit einem Elektronenstrahl, oder durch selektives Verkleben, z.B. mit aus einem Druckerkopf selektiv eingespritztem Binder oder Klebstoff.

## Patentansprüche

1. Verfahren zum Herstellen eines dreidimensionalen Objekts mit den Schritten
Bilden des Objekts (3) in einem, innerhalb einer Prozeßkammer (100) angeordneten Behälter (1, 200) auf einem in dem Behälter verschiebbaren Träger (4) durch aufeinanderfolgendes selektives Verfestigen von Schichten eines verfestigbaren pulverförmigen Materials (11) an dem Querschnitt des Objekts in der jeweiligen Schicht entsprechenden Stellen,
gesteuertes Entfernen von nicht verfestigtem pulverförmigen Material (11) nach dem Fertigstellen des Objekts (3),
**dadurch gekennzeichnet, daß** nach dem Fertigstellen des Objekts (3) der Träger (4) innerhalb des Behälters (1, 200) sukzessive angehoben wird und daß im Bereich des Behälterrandes (2, 61) vorhandenes unverfestigteiPulvermaterial entfernt wird.

2. Verfahren nach Anspruch 1, **dadurch gekennzeichnet, daß** das unverfestigte Pulvermaterial mechanisch entfernt wird.

3. Verfahren nach Anspruches 2, **dadurch gekennzeichnet, daß** das unverfestigte Pulvermaterial mittels Bürsten entfernt wird.

4. Verfahren nach einem der Ansprüche 1 bis 3, **dadurch gekennzeichnet, daß** das unverfestigte Pulvermaterial mittels eines fluiden Mediums entfernt wird.

5. Verfahren nach Anspruch 4, **dadurch gekennzeichnet, daß** das unverfestigte Pulvermaterial mittels eines Gasstromes entfernt wird.

6. Verfahren nach Anspruch 5, **dadurch gekennzeichnet, daß** der Gasstrom im wesentlichen tangential zur Oberfläche des Pulvers gerichtet ist.

7. Verfahren nach Anspruch 5 oder 6, **dadurch gekennzeichnet, daß** die Richtung des Gasstromes gesteuert wird.

8. Verfahren nach einem der Ansprüche 5 bis 7, **dadurch gekennzeichnet, daß** das unverfestigte Pulver (11) weggeblasen wird.

9. Verfahren nach einem der Ansprüche 5 bis 8, **dadurch gekennzeichnet, daß** das unverfestigte Pulver (11) abgesaugt wird.

10. Verfahren nach einem der Ansprüche 1 bis 9, **dadurch gekennzeichnet, daß** der Täger (4) nach der Fertigstellung des Objekts kontinuierlich angehoben wird.

11. Verfahren nach einem der Ansprüche 1 bis 9, dadurch gekenzeichnet, daß der Träger nach der Fertigstellung des Objekts schrittweise angehoben wird.

12. Verfahren nach einem der Ansprüche 1 bis 11, **dadurch gekennzeichnet, daß** das Objekt (3) während des Entfernens des unverfestigten Pulvers (11) gekühlt wird.

13. Verfahren nach Anspruch 12, **dadurch gekennzeichnet, daß** das Objekt (3) durch einen im wesentlichen tangential zur Pulveroberfläche gerichteten Gasstrom gekühlt wird.

14. Verfahren nach einem der Ansprüche 1 bis 13, **dadurch gekennzeichnet, daß** der Behälter (1, 200) nach der Fertigstellung des Objekts aus der Prozeßkammer (100) entfernt wird.

15. Verfahren nach einem der Ansprüche 1 bis 14, **dadurch gekennzeichnet, daß** der Behälter (1, 200) nach Fertigstellung des Objekts (3) in einen vorbestimmten Winkel zur Vertikalen gekippt wird.

16. Verfahren nach Anspruch 15, **dadurch gekennzeichnet, daß** das nicht verfestigte Pulver (11) und das gebildete Objekt (3) durch Anheben des Trägers in dem Behälter und sukzessives Überlaufen über eine Behälterkante entfernt werden.

17. Verfahren nach Anspruch 16, **dadurch gekennzeichnet, daß** das nicht verfestigte Pulver (11) und das Objekt (3) in einer Siebeinrichtung (80) voneinander getrennt werden.

18. Verfahren nach einem der Ansprüche 1 bis 17, **dadurch gekennzeichnet, daß** entferntes nicht verfestigtes Pulver (11) gesammelt und abtransportiert wird.

19. Verfahren nach einem der Ansprüche 1 bis 18, **dadurch gekennzeichnet, daß** bei der Entfernung des unverfestigten Pulvermaterials die Oberfläche des Objekts nachbehandelt wird.

20. Verfahren nach einem der Ansprüche 5 bis 19, **dadurch gekennzeichnet, daß** die Temperatur des fluiden Mediums und/oder die Umgebungstemperatur des Behälters gesteuert wird.

21. Verfahren nach einem der Ansprüche 1 bis 20, **dadurch gekennzeichnet, daß** das Pulvermaterial unter Einwirkung elektromagnetischer Strahlung verfestigt wird.

22. Verfahren zum Herstellen eines dreidimensionalen Objekts gemäß Anspruch 1, **gekennzeichnet durch** den Schritt des gesteuerten Abkühlen des Objekts (3) nach der Fertigstellung.

23. Verfahren nach Anspruch 22, **dadurch gekennzeichnet, dass** das Abkühlen mittels eines Gases bewirkt wird, welches bevorzugt in das Pulverbett aus dem noch unverfestigten Pulver (11) eingeblasen wird, oder über die freiliegende Oberfläche des Objektes (3) in dem Pulverbett geblasen wird.

24. Verfahren nach Anspruch 22 oder 23, **dadurch gekennzeichnet, dass** das Objekt beim Abkühlen nachbehandelt wird.

25. Verfahren zum Herstellen eines dreidimensionalen Objekts nach Anspruch 1, **dadurch gekennzeichnet, daß** das gebildete Objekt automatisch einer Infiltration unterzogen wird.

26. Verfahren nach Anspruch 25, **dadurch gekennzeichnet, daß** die Infiltration mit Wachs oder Epoxidharz erfolgt.

27. Verfahren nach Anspruch 25 oder 26, **dadurch gekennzeichnet, daß** die Infiltration temperaturgesteuert erfolgt.

28. Vorrichtung zum Herstellen eines dreidimensionalen Objekts durch aufeinanderfolgendes Verfestigen von Schichten eines verfestigbaren Pulvermaterials mit
einem Behälter (1; 200) zur Aufnahme des herzustellenden Objekts (3), einem in dem Behälter verschiebbaren Träger (4) und
einer Einrichtung (50; 500) zum gesteuerten Entfernen von nicht verfestigtem pulverförmigen Material (11) nach dem Fertigstellen des Objekts (3), **dadurch gekennzeichnet, daß** die Einrichtung (50; 500) zum gesteuerten Entfernen von nicht verfestigtem pulverförmigen Material (11) Mittel zum kontinuierlichen oder schrittweisen Anheben des Trägers (4) in dem Behälter (1; 200) aufweist.

29. Vorrichtung nach Anspruch 28, **dadurch gekennzeichnet, daß** eine Einrichtung zum gesteuerten Abkühlen des Objekts (3) während des gesteuerten Entfernens von nichtverfestigten pulverförmigen Materials vorgesehen ist.

30. Vorrichtung nach Anspruch 28 oder 29 **dadurch gekennzeichnet, daß** die Einrichtung (50; 500) zum gesteuerten Entfernen von nicht verfestigtem pulverförmigen Material (11) Mittel zum Richten eines Stromes eines fluiden Mediums im wesentlichen tangential zum oberen Rand des Behälters (1; 200) aufweist.

31. Vorrichtung nach Anspruch 30, **dadurch gekennzeichnet, daß** eine Einrichtung zum Absaugen von unverfestigtem Pulvermaterial vorgesehen ist.

32. Vorrichtung nach einem der Ansprüche 28 bis 31 **dadurch gekennzeichnet, daß** der Behälter (200) in einem Bereich an seinem oberen Rand (61) eine nach außen gewölbte Überlaufeinrichtung (63) aufweist.

33. Vorrichtung nach Anspruch 32, **dadurch gekennzeichnet, daß** Mittel (71) zum Kippen des Behälters um einen vorbestimmten Winkel (A) zur Vertikalen in Richtung der Überlaufeinrichtung (63) vorgesehen sind.

34. Vorrichtung nach Anspruch 33, **dadurch gekennzeichnet, daß** Mittel zum Trennen des über die Überlaufkante (63) aus dem Behälter (200) entfernten unverfestigten Pulvermateriales (11) und des gebildeten Objektes (3) vorgesehen sind.

35. Vorrichtung nach einem der Ansprüche 28 bis 34, **dadurch gekennzeichnet, daß** die Einrichtung (50; 500) zum gesteuerten Entfernen von nicht verfestigtem pulverförmigen, Material (11) außerhalb einer Prozeßkammer (100), in der das Objekt gebildet wird, vorgesehen ist.

36. Vorrichtung nach einem der Ansprüche 28 bis 35, **dadurch gekennzeichnet, daß** eine Einrichtung zum mechanischen Entfernen des unverfestigten Pulvermateriales vorgesehen ist.

37. Vorrichtung nach einem der Ansprüche 28 bis 36, **dadurch gekennzeichnet, daß** eine Vorrichtung zur Steuerung der Temperatur der den Behälter umgebenden Atmosphäre und/oder des zum Entfernen des unverfestigten Pulvermaterials verwendeten Mediums vorgesehen ist.

38. Vorrichtung nach einem Ansprüche 28 bis 37, **dadurch gekennzeichnet, dass** eine Einrichtung zum Zuführen von Gas (5; 500; 600) in das Pulverbett vorgesehen ist.

39. Vorrichtung nach einem der Ansprüche 28 bis 38, **dadurch gekennzeichnet, daß** eine Einrichtung zum automatischen Infiltrieren des gebildeten Objekts mit einem Material, bevorzugt Wachs oder Epoxidharz, vorgesehen ist.

40. Vorrichtung zum automatischen Auspacken eines dreidimensionalen Objekts, welches durch aufeinanderfolgendes Verfestigen von Schichten eines verfestigbaren Pulvermaterials hergestellt wird, mit
einem Behälter (1; 200) zur Aufnahme des herzustellenden Objekts (3), einem in dem Behälter verschiebbaren Träger (4) und mit
einer Einrichtung (50; 500) zum gesteuerten Entfernen von nicht verfestigtem pulverförmigen Material (11) nach dem Fertigstellen des Objekts (3), **dadurch gekennzeichnet, daß** die Einrichtung (50; 500) zum gesteuerten Entfernen von nicht verfestigtem pulverförmigen Material (11) Mittel zum kontinuierlichen oder schrittweisen Anheben des Trägers (4) in dem Behälter (1; 200) aufweist.

41. Vorrichtung nach Anspruch 40 **gekennzeichnet durch** eine Einrichtung zum gesteuerten Abkühlen des gebildeten Objekts (500; 600).

42. Vorrichtung nach Anspruch 40, **dadurch gekennzeichnet, dass** sie in einer Vorrichtung zum Herstellen eines dreidimensionalen Objekts, insbesondere einer Lasersintervorrichtung vorgesehen ist.

## Claims

1. Process for producing a three-dimensional object having the steps
forming the object (3) in a container (1, 200) arranged within a process chamber (100) on a carrier (4) which can be displaced in the container by sequential selective solidification of layers of a solidifiable pulverulent material (11) at positions corresponding to the cross-section of the object in the particular layer, controlled removal of non-solidified pulverulent material (11) after completing the object (3),
**characterised in that** after completing the object (3), the carrier (4) is raised successively within the container (1, 200) and **in that** non-solidified powder material present in the region of the container rim (2, 61) is removed.

2. Process according to claim 1, **characterised in that** the non-solidified powder material is removed mechanically.

3. Process according to claim 2, **characterised in that** the non-solidified powder material is removed by means of brushes.

4. Process according to one of claims 1 to 3,
**characterised in that** the non-solidified powder material is removed by means of a fluid medium.

5. Process according to claim 4, **characterised in that** the non-solidified powder material is removed by means of a gas stream.

6. Process according to claim 5, **characterised in that** the gas stream is directed essentially tangentially to the surface of the powder.

7. Process according to claim 5 or 6, **characterised in that** the direction of the gas stream is controlled.

8. Process according to one of claims 5 to 7,
**characterised in that** the non-solidified powder (11) is blown away.

9. Process according to one of claims 5 to 8,
**characterised in that** the non-solidified powder (11) is removed by suction.

10. Process according to one of claims 1 to 9,
**characterised in that** the carrier (4) is raised continuously after completing the object.

11. Process according to one of claims 1 to 9,
**characterised in that** the carrier is raised stepwise after completing the object.

12. Process according to one of claims 1 to 11,
**characterised in that** the object (3) is cooled during removal of the non-solidified powder (11).

13. Process according to claim 12, **characterised in that** the object (3) is cooled by a gas stream directed essentially tangentially to the powder surface.

14. Process according to one of claims 1 to 13,
**characterised in that** the container (1, 200) is removed from the process chamber (100) after completing the object.

15. Process according to one of claims 1 to 14,
**characterised in that** the container (1, 200) is tilted at a predetermined angle to the vertical after completing the object (3).

16. Process according to claim 15, **characterised in that** the non-solidified powder (11) and the object (3) formed are removed by raising the carrier in the container and successive overflowing over a container edge.

17. Process according to claim 16, **characterised in that** the non-solidified powder (11) and the object (3) are separated from one another in a sieve device (80).

18. Process according to one of claims 1 to 17,
**characterised in that** removed non-solidified powder (11) is collected and transported away.

19. Process according to one of claims 1 to 18,
**characterised in that** the surface of the object is subsequently treated during removal of the non-solidified powder material.

20. Process according to one of claims 5 to 19,
**characterised in that** the temperature of the fluid medium and/or the ambient temperature of the container is controlled.

21. Process according to one of claims 1 to 20,
**characterised in that** the powder material is solidified under action of electromagnetic radiation.

22. Process for producing a three-dimensional object according to claim 1, **characterised by** the step of controlled cooling of the object (3) after completing.

23. Process according to claim 22, **characterised in that** cooling is effected by means of a gas, which is preferably blown into the powder bed of the still non-solidified powder (11), or is blown over the exposed surface of the object (3) in the powder bed.

24. Process according to claim 22 or 23, **characterised in that** the object is subsequently treated during cooling.

25. Process for producing a three-dimensional object according to claim 1, **characterised in that** the object formed is automatically subjected to infiltration.

26. Process according to claim 25, **characterised in that** the infiltration takes place with wax or epoxy resin.

27. Process according to claim 25 or 26, **characterised in that** the infiltration is temperature controlled.

28. Device for producing a three-dimensional object by sequential solidification of layers of a solidifiable powder material having a container (1; 200) for accommodating the object (3) to be produced, a carrier (4) which can be displaced in the container, and a device (50; 500) for controlled removal of non-solidified pulverulent material (11) after completing the object (3),
**characterised in that** the device (50; 500) for controlled removal of non-solidified pulverulent material (11) has means for continuous or stepwise raising of the carrier (4) in the container (1; 200).

29. Device according to claim 28, **characterised in that** a device for controlled cooling of the object (3) during the controlled removal of non-solidified pulverulent material is provided.

30. Device according to claim 28 or 29, **characterised in that** the device (50; 500) for controlled removal of non-solidified pulverulent material (11) has means for directing a stream of fluid medium essentially tangentially to the upper rim of the container (1; 200).

31. Device according to claim 30, **characterised in that** a device is provided for removing non-solidified powder material by suction.

32. Device according to one of claims 28 to 31,
**characterised in that** the container (200) has an overflow device (63) curved outwards in a region on its upper rim (61).

33. Device according to claim 32, **characterised in that** means (71) are provided for tilting the container by a predetermined angle (A) to the vertical in the direction of the overflow device (63).

34. Device according to claim 33, **characterised in that** means are provided for separating the non-solidified powder material (11) removed from the container (200) over the overflow edge (63) and the object (3) formed.

35. Device according to one of claims 28 to 34,
**characterised in that** the device (50; 500) is provided for controlled removal of non-solidified pulverulent material (11) outside the process chamber (100), in which the object is formed.

36. Device according to one of claims 28 to 35,
**characterised in that** a device is provided for mechanical removal of the non-solidified powder material.

37. Device according to one of claims 28 to 36,
**characterised in that** a device is provided for control of the temperature of the atmosphere surrounding the container and/or of the medium used to remove the non-solidified powder material.

38. Device according to one of claims 28 to 37,
**characterised in that** a device is provided for supplying gas (5; 500; 600) to the powder bed.

39. Device according to one of claims 28 to 38,
**characterised in that** a device is provided for automatic infiltration of the object formed with a material, preferably wax or epoxy resin.

40. Device for automatic unpacking of a three-dimensional object, which is produced by sequential solidification of layers of a solidifiable powder material, having a container (1; 200) for accommodating the object (3) to be produced, a carrier (4) which can be displaced in the container and having a device (50; 500) for controlled removal of non-solidified pulverulent material (11) after completing the object (3), **characterised in that** the device (50; 500) for controlled removal of non-solidified pulverulent material (11) has means for continuous or stepwise raising of the carrier (4) in the container (1; 200).

41. Device according to claim 40, **characterised by** a device for controlled cooling of the object formed (500; 600).

42. Device according to claim 40, **characterised in that** it is provided in a device for producing a three-dimensional object, in particular a laser sintering device.

## Revendications

1. Procédé de fabrication d'un objet tridimensionnel avec les étapes consistant à :
former l'objet (3) dans un récipient (1, 200) situé dans une chambre de process (100), sur un support (4) coulissant dans le récipient, par solidification successive et sélective de couches d'un matériau pulvérulent solidifiable (11) à la section de l'objet aux endroit correspondants sur la couche concernée ;
éliminer de manière contrôlée le matériau pulvérulent non solidifié (11) après la fabrication de l'objet (3), **caractérisé en ce que**, après la fabrication de l'objet (3), le support (4) à l'intérieur du récipient (1, 200) est levé progressivement et **en ce que**, au niveau du bord de récipient (2, 61) le matériau pulvérulent non solidifié est éliminé.

2. Procédé selon la revendication 1, **caractérisé en ce que** le matériau pulvérulent non solidifié est éliminé mécaniquement.

3. Procédé selon la revendication 2, **caractérisé en ce que** le matériau pulvérulent non solidifié est éliminé à l'aide de brosses.

4. Procédé selon l'une des revendications 1 à 3, **caractérisé en ce que** le matériau pulvérulent non solidifié est éliminé à l'aide d'un fluide.

5. Procédé selon la revendication 4, **caractérisé en ce que** le matériau pulvérulent non solidifié est éliminé à l'aide d'un flux de gaz.

6. Procédé selon la revendication 5, **caractérisé en ce que** le flux de gaz est orienté de manière sensiblement tangentielle par rapport à la surface de la poudre.

7. Procédé selon la revendication 5 ou 6, **caractérisé en ce que** la direction du flux de gaz est contrôlée.

8. Procédé selon l'une des revendications 5 à 7, **caractérisé en ce que** la poudre non solidifiée (11) est soufflée.

9. Procédé selon l'une des revendications 5 à 8, **caractérisé en ce que** la poudre non solidifiée (11) est aspirée.

10. Procédé selon l'une des revendications 1 à 9, **caractérisé en ce que** le support (4) est levé en continu après la fabrication de l'objet.

11. Procédé selon l'une des revendications 1 à 9, **caractérisé en ce que** le support est levé par étapes après la fabrication de l'objet.

12. Procédé selon l'une des revendications 1 à 11, **caractérisé en ce que** l'objet (3) est refroidi pendant l'élimination de la poudre (11) non solidifiée.

13. Procédé selon la revendication 12, **caractérisé en ce que** l'objet (3) est refroidi par un flux de gaz orienté de manière sensiblement tangentielle à la surface de la poudre.

14. Procédé selon l'une des revendications 1 à 13, **caractérisé en ce que** le récipient (1, 200) est retiré de la chambre de process (100) après la fabrication de l'objet.

15. Procédé selon l'une des revendications 1 à 14, **caractérisé en ce que** le récipient (1, 200) est basculé, après la fabrication de l'objet (3), d'un angle prédéfini par rapport à la verticale.

16. Procédé selon la revendication 15, **caractérisé en ce que** la poudre (11) non solidifiée et l'objet (3) produit sont évacués par levage du support dans le récipient et débordement successif par dessus une arête du récipient.

17. Procédé selon la revendication 16, **caractérisé en ce que** la poudre (11) non solidifiée et l'objet (3) sont séparés l'un de l'autre dans un dispositif de tamisage (80).

18. Procédé selon l'une des revendications 1 à 17, **caractérisé en ce que** la poudre (11) non solidifiée est collectée et évacuée.

19. Procédé selon l'une des revendications 1 à 18, **caractérisé en ce que**, lors de l'élimination du matériau pulvérulent non solidifié, la surface de l'objet est traitée.

20. Procédé selon l'une des revendications 5 à 19, **caractérisé en ce que** la température du fluide et/ou la température ambiante du récipient est contrôlée.

21. Procédé selon l'une des revendications 1 à 20, **caractérisé en ce que** le matériau pulvérulent est solidifiée sous l'effet d'un rayonnement électromagnétique.

22. Procédé de fabrication d'un objet tridimensionnel selon la revendication 1, **caractérisé par** l'étape de refroidissement contrôlé de l'objet (3) après la fabrication.

23. Procédé selon la revendication 22, **caractérisé en ce que** le refroidissement est réalisé à l'aide d'un gaz qui est, de préférence, soufflé dans le lit de poudre à partir de la poudre (11) non solidifiée ou au-dessus de la surface libre de l'objet (3) vers le lit de poudre.

24. Procédé selon la revendication 22 ou 23, **caractérisé en ce que** l'objet est traité lors du refroidissement.

25. Procédé de fabrication d'un objet tridimensionnel selon la revendication 1, **caractérisé en ce que** l'objet produit est soumis automatiquement à une infiltration.

26. Procédé selon la revendication 25, **caractérisé en ce que** l'infiltration est réalisée avec de la cire ou de la résine époxyde.

27. Procédé selon la revendication 25 ou 26, **caractérisé en ce que** l'infiltration est réalisée avec une régulation de température.

28. Dispositif de fabrication d'un objet tridimensionnel par solidification successive de couches d'un matériau pulvérulent solidifiable avec
un récipient (1, 200) pour contenir un objet (3) à fabriquer, un support (4) coulissant dans le récipient et
un dispositif (50, 500) pour l'élimination contrôlée du matériau pulvérulent (11) non solidifié après la fabrication de l'objet (3),
**caractérisé en ce que** le dispositif (50, 500) pour l'élimination contrôlée de matériau pulvérulent (11) non solidifié comporte des moyens pour le levage continu ou par étapes du support (4) dans le récipient (1, 200).

29. Dispositif selon la revendication 28, **caractérisé en ce qu'**un dispositif pour le refroidissement contrôlé de l'objet (3) est prévu pendant l'élimination contrôlée de matériau pulvérulent non solidifié.

30. Dispositif selon la revendication 28 ou 29, **caractérisé en ce que** le dispositif (50, 200) pour l'élimination contrôlée du matériau pulvérulent (11) non solidifié comporte des moyens pour l'orientation d'un flux de fluide de manière sensiblement tangentielle au bord supérieur du récipient (1, 200).

31. Dispositif selon la revendication 30, **caractérisé en ce qu'**un dispositif d'aspiration du matériau pulvérulent non solidifié est prévu.

32. Dispositif selon l'une des revendications 28 à 31, **caractérisé en ce que** le récipient (200) comporte, dans une zone sur son bord supérieur (61), un dispositif de trop-plein (63) bombé vers l'extérieur.

33. Dispositif selon la revendication 32, **caractérisé en ce que** des moyens (71) de basculement du récipient à un angle (A) prédéfini par rapport à la verticale en direction du dispositif de trop-plein (63), sont prévus.

34. Dispositif selon la revendication 33, **caractérisé en ce qu'**un moyen de séparation du matériau pulvérulent (11) non solidifié évacué du récipient (200) par dessus l'arête de trop-plein (63) et de l'objet (3) fabriqué, est prévu.

35. Dispositif selon l'une des revendications 28 à 34, **caractérisé en ce que** le dispositif (50, 500) pour l'élimination contrôlée du matériau pulvérulent (11) non solidifié hors d'une chambre de process (100) dans laquelle l'objet est fabriqué, est prévu.

36. Dispositif selon l'une des revendications 28 à 35, **caractérisé en ce qu'**un dispositif d'élimination mécanique du matériau pulvérulent non solidifié, est prévu.

37. Dispositif selon l'une des revendications 28 à 36, **caractérisé en ce qu'**un dispositif de contrôle de température de l'atmosphère environnant le récipient et/ou du fluide utilisé pour l'élimination du matériau pulvérulent, est prévu.

38. Dispositif selon l'une des revendications 28 à 37, **caractérisé en ce qu'**un dispositif d'alimentation de gaz (5, 500, 600) est prévu dans le lit de poudre.

39. Dispositif selon l'une des revendications 28 à 38, **caractérisé en ce qu'**un dispositif d'infiltration automatique de l'objet fabriqué avec un matériau, de préférence de la cire ou de la résine époxyde, est prévu.

40. Dispositif de démoulage automatique d'un objet tridimensionnel fabriqué par solidification successive de couches d'un matériau pulvérulent solidifiable avec
un récipient (1, 200) pour contenir l'objet (3) à fabriquer, un support (4) coulissant dans le récipient et avec
un dispositif (50, 500) pour l'élimination contrôlée du matériau pulvérulent (11) non solidifié après la fabrication de l'objet (3),
**caractérisé en ce que** le dispositif (50, 500) pour l'élimination contrôlée de matériau pulvérulent (11) non solidifié comporte des moyens pour le levage continu ou par étapes du support (4) dans le récipient (1, 200).

41. Dispositif selon la revendication 40, **caractérisé par** un dispositif de refroidissement contrôlé de l'objet fabriqué (500, 600).

42. Dispositif selon la revendication 40, **caractérisé en ce qu'**il est prévu dans un dispositif de fabrication d'un objet tridimensionnel, notamment un dispositif de frittage au laser.
